# EUROPÄISCHE PATENTSCHRIFT

(11) **EP 0 744 874 B1**
(45) Veröffentlichungstag und Bekanntmachung des Hinweises auf die Patenterteilung: **17.08.2005**
(21) Anmeldenummer: 96107598.3
(22) Anmeldetag: 13.05.1996
(51) Int. Cl.: H04Q 3/545

(54) **Verfahren zur Behebung von programmbezogenen Fehlern in programmgesteuerten Kommunikationsanlagen**
Method for eliminating program faults in program controlled communication installations
Procédé pour l'élimination de fautes de programme dans des installations de communication à commande programmée

(30) Priorität: 24.05.1995 DE 19519104
(43) Veröffentlichungstag der Anmeldung: 27.11.1996
(73) Patentinhaber: SIEMENS AKTIENGESELLSCHAFT, 80333 München (DE)
(72) Erfinder: Köninger, Reinhard, Dipl.-Ing., 45894 Gelsenkirchen (DE); Gericke, Harald, 46119 Oberhausen (DE)

(56) Entgegenhaltungen:
- DE-C- 4 321 774
- US-A- 5 287 505
- ENGRAM R L ET AL: "TRANSPARENT SOFTWARE AND HARDWARE CHANGES IN A TELECOMMUNICATION SYSTEM" 5TH INTERNATIONAL CONFERENCE ON SOFTWARE ENGINEERING FOR TELECOMMUNICATION SWITCHING SYSTEMS, 4. Juli 1983 (1983-07-04), Seite 157-162 XP002004485 LONDON, GB
- FERENCE D ET AL: "TECHNIQUES FOR UPGRADING SOFTWARE IN THE ITT 1210 STORED PROGRAM-CONTROL DIGITAL SWITCH" ELECTRO/81 CONFERENCE RECORD, 7. - 9. April 1981, Seiten 1-7, XP002043553 NEW YORK, USA

## Beschreibung

Programmgesteuerte Kommunikationsanlagen sind Anordnungen zum Auf- und Abbau von Kommunikationsverbindungen von und zu Kommunikationsendgeräten, die an die jeweilige Kommunikationsanlage angeschlossen sind. Programmgesteuerte Kommunikationsanlagen dienen weiterhin der Unterstützung weiterer Leistungsmerkmale während oder außerhalb einer Kommunikationsverbindung. Diese Kommunikationsanlagen sind üblicherweise mit weiteren Kommunikationsanlagen über öffentliche oder private Netze verbunden. Eine derartige Kommunikationsanlage ist aus der europäischen Patentschrift EP 0 347 644 B1 bekannt.

In einer solchen Kommunikationsanlage kommen ein oder mehrere Programme zum Einsatz, die Komponenten zur Inbetriebnahme der Kommunikationsanlage und zur Steuerung der Funktionen der Kommunikationsanlage sowie anwendungsspezifische Komponenten umfassen. Diese Programme sind in Speichern der Kommunikationsanlage geladen und bewirken zusammen mit den der jeweiligen Kommunikationsanlage zugeordneten zumindest einen Prozessorbaugruppe den vorgegebenen Funktionsablauf der Kommunikationsanlage.

Durch Fehler in den eingesetzten Programmen, sowie durch Fehler infolge der Inkompatibilität verschiedener Programmversionen oder Datenbasen kommt es jedoch zu sporadischen Störungen der Arbeitsweise der Kommunikationsanlage. Diese Fehler, die in der Fachwelt als Softwarerestfehler bezeichnet werden, sind einem oder mehreren Programmen zuordenbar und können durch Austausch des einen oder mehrerer Programme behoben werden. Desweiteren können schaltungstechnisch bedingte Fehler oder durch Programmersatz nicht behebbare Fehler auftreten. In der Kommunikationsanlage wird nach jedem Auftreten eines Fehlers eine Fehlermeldung erzeugt und protokolliert.

Es ist weiterhin allgemein bekannt, daß eine Kommunikationsanlage bei Auftreten eines Fehlers eine Verbindung zu einer Servicezentrale aufbaut und eine Fehlermeldung an die Servicezentrale übermittelt wird. In dieser als "Clearingstelle" wirkenden Servicezentrale wird die Fehlermeldung angezeigt und durch eine Bedienperson manuell eine Fehlerbeseitigung eingeleitet. Für die Fehler, die durch einen Ersatz von zumindest einem in der fehlerbehafteten Kommunikationsanlage eingesetzten Programm behebbar sind, bedeutet dies, daß die zur Behebung des Fehlers vorgesehenen Programme ausgewählt und der Kommunikationsanlage zugeführt werden müssen. Dies erfolgte bisher durch einen Tausch der Speicherplatte vor Ort, d.h. bei der Kommunikationsanlage. Die Wirksamkeit dieser Servicezentrale ist von der ständigen Anwesenheit einer Bedienperson abhängig und hat weiterhin eine Verzögerung der Fehlerbehebung durch die Reaktionszeit der Bedienperson und die Einleitung der Programmübermittlung zur Folge.

Die Druckschrift US 5 287 505 Calvert et al. "On-line Problem Management of Remote Data Processing Systems, Using Local Problem Determination Procedures And A Centralized Database" beschreibt ein Datenverarbeitungssystem, welches aus einem oder mehreren dezentral angeordneten Computern und einer Service-Zentrale zur Fehlerbehebung besteht. Jeder der Computer ist mit einem oder mehreren Software-Modulen ausgestattet und wird dabei mittels einer eigenen Diagnose-Software überwacht. Bei auftretenden Fehlern in den Software-Modulen versenden der oder die Computer Fehlermeldungen zu der Service-Zentrale, welche die Fehlermeldungen analysiert und anhand der Analyse eine geeignete Problem-Lösung bereitstellt. Dabei ist vorgesehen, dass beispielsweise eine Korrektur-Software ("Patch") oder eine aktualisierte Programm-Version für zumindest eines der Software-Module breitgestellt und zu dem betroffenen Computer übermittelt wird. Der Benutzer des betroffenen Computers wird sodann aufgefordert, sofort oder zeitversetzt das übermittelte Korrektur-Programm bzw. das aktualisierte Software-Modul zu installieren und den Computer bzw. die darauf befindlichen Anwendungen neu zu starten.

Der Erfindung liegt die Aufgabe zugrunde, die Fehlerbehebung der programmbezogenen Fehler in mit einer Servicezentrale verbindbaren Kommunikationsanlagen zu vereinfachen. Diese Aufgabe wird von einem Verfahren nach den Merkmalen des Patentanspruch 1 gelöst.

Der wesentliche Vorteil des erfindungsgemäßen Verfahrens ist in der Beschleunigung und Automatisierung der Fehlerbehebung in der Servicezentrale zu sehen. Die Automatisierung wird bewirkt, indem in der Servicezentrale kommunikationsanlagenprogrammspezifische Fehlerinformationen gespeichert sind, denen zur Fehlerbehebung vorgesehene Programme zugeordnet sind, und nach Eintreffen einer Fehlermeldung in der Servicezentrale eine in der Fehlermeldung enthaltende Fehlerinformation mit den gespeicherten Fehlerinformationen verglichen wird und bei Übereinstimmung durch die Servicezentrale das zugeordnete zumindest eine zur Behebung des Fehlers vorgesehene Programm an die Kommunikationsanlage übermittelt, in der Kommunikationsanlage gespeichert und in den Funktionsablauf einbezogen wird.

Gemäß einer vorteilhaften Ausgestaltung des erfindungsgemäßen Verfahrens ist eine eindeutige Fehlerzuordnung mit einer Bildung der Fehlerinformation durch Fehlerklassen, die zumindest ein Programm bezeichnen, und durch eine die Fehlerursache beschreibende Fehlernummer vorzunehmen - Anspruch 3.

Eine weitere vorteilhafte Weiterbildung sieht vor, daß in der Servicezentrale zusätzlich Identifikationsinformationen für die Kommunikationsanlagen gespeichert sind und wenn eine Identifikationsinformation in einer Fehlermeldung enthalten ist, diese Identifikationsinformation in den Vergleich einzubeziehen - Anspruch 4. Somit ist eine eindeutige Zuordnung jeder Fehlermeldung zu der übermittelnden Kommunikationsanlage ohne weitere Zusatzmeldungen möglich. Desweiteren enthalten die genannten Identifikationsinformationen zusätzliche Konfigurationsangaben zum schaltungstechnischen Aufbau der die Fehlermeldung übermittelnden Kommunikationsanlage; die Konfigurationsangaben sind ebenfalls in der Servicezentrale gespeichert und werden in den Vergleich einbezogen - Anspruch 5. Die Konfigurationsangaben über die schaltungstechnische Konfiguration der Kommunikationsanlagen müssen also in der Servicezentrale nicht gespeichert sein, wenn diese Konfigurationsangaben bei der Auswahl der zur Fehlerbehebung vorgesehenen Programme erforderlich sind.

Weiterhin ist vorteilhafterweise in der Servicezentrale eine Referenztabelle zur Zuordnung von durch die Fehlerinformationen beschriebenen Fehlerarten zu den zur Fehlerbehebung vorgesehenen Programmen unter Berücksichtigung verschiedener schaltungstechnisch und programmtechnischer Konfigurationen der Kommunikationsanlagen vorgesehen - Anspruch 6. Diese Referenztabelle ist in einen Speicher der Servicezentrale abgelegt, kann jederzeit aktualisiert werden und dient als Vergleichsgrundlage für die in den übermittelten Fehlermeldungen enthaltenen Fehlerinformationen, wobei die Zuordnung der Fehlerinformation durch Berücksichtigung verschiedener schaltungstechnisch und programmtechnischer Konfigurationen der Kommunikationsanlagen eindeutig gestaltet ist.

Das Verfahren ermöglicht die Einbeziehung des zumindest einen übermittelten Programms während des Betriebes der Kommunikationsanlage, indem das zumindest eine von der Servicezentrale übermittelte, zur Fehlerbehebung vorgesehene Programm in einen der jeweiligen Kommunikationsanlage zugeordneten Zusatzspeicher geladen wird. Nach Abschluß der Übermittlung wird zur Einbeziehung des zumindest einen übermittelten Programms auf dieses in den Zusatzspeicher geladene, zur Fehlerbehebung vorgesehene Programm umgeschaltet. Damit wird der Funktionsablauf der Kommunikationsanlage so wenig wie möglich gestört und Funktionsunterbrechungen werden vermieden.

Weitere Ausbildungen des erfindungsgemäßen Verfahrens sehen vor, in der Servicezentrale die durch die Einbeziehung des zumindest einen übermittelten Programms nicht behebbaren Fehler unter Angabe der Identifikationsinformation und der Fehlerinformation protokolliert werden - Anspruch 7 - und damit einer manuellen Bearbeitung zugeführt werden können. Die Protokollierung kann zusätzlich auch für die behobenen Fehler durchgeführt werden. Die zur Fehlerbehebung vorgesehenen Programme sind zumindest teilweise in der Servicezentrale intern und/oder extern gespeichert - Anspruch 8 - und damit sehr schnell für eine Übermittlung abrufbar.

Eine Anordnung zur Durchführung des erfindungsgemäßen Verfahren ist in einem weiteren Hauptanspruch angegeben.

Im folgenden wird das Verfahren zur Fehlerbehebung in mit einer Servicezentrale verbindbaren, durch Programme gesteuerten Kommunikationsanlagen anhand von Figuren näher erläutert.
- FIG 1: zeigt eine Anordnung zur Durchführung des erfindungsgemäßen Verfahrens mit einer Servicezentrale und mit ihr verbundenen Kommunikationsanlagen,
- FIG 2: zeigt den Ablauf der Meldungsübermittlung und der Programmübermittlung zwischen Kommunikationsanlage und Servicezentrale und
- FIG 3: zeigt den Ersatz der bisher verwendeten Programme durch die übermittelten Programme in einer Kommunikationsanlage.

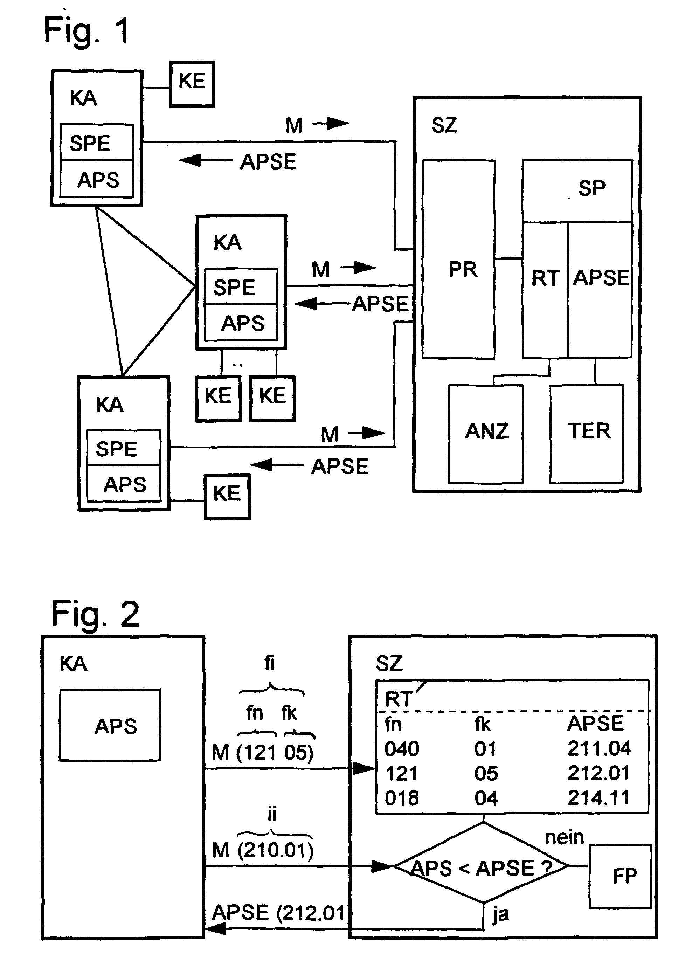

Die in FIG 1 dargestellte Anordnung umfaßt eine Servicezentrale SZ und mit ihr zumindestens zeitweise verbindbaren Kommunikationsanlagen KA. Die beispielhaft drei dargestellten Kommunikationsanlagen KA sind ihrerseits zum Auf- und Abbau und zur Unterhaltung von Kommunikationsverbindungen von und zu Kommunikationsendgeräten KE untereinander vernetzt. Die Kommunikationsanlagen KA sind programmgesteuert, wobei die Programme APS im Speicher SPE der Kommunikationsanlage KA enthalten sind und durch nicht dargestellte Prozessoreinrichtungen abgearbeitet werden. Die Kommunikationsendgeräte KE sind jeweils einer Kommunikationsanlage KA zugeordnet und mit dieser verbindbar. Es kann sich dabei sowohl um drahtgebundene oder drahtlose Kommunikationsverbindungen handeln. Die jeweiligen Verbindungen zwischen den Kommunikationsanlagen KA und der Servicezentrale SZ werden über das Kommunikationsnetz, das auch die Kommunikationsanlagen KA verbindet, auf- und abgebaut. Es sind jedoch auch getrennte Verbindungen oder nur zeitweilig zur Verfügung stehende Verbindungen einsetzbar.

Die Servicezentrale SZ wird durch eine in ihr enthaltene Prozessorgruppe PR gesteuert. Die Servicezentrale SZ umfaßt ferner einen Speicher SP, der sowohl mit der Prozessorgruppe PR als auch mit Eingabemitteln TER und mit Anzeigemitteln ANZ verbunden ist. Die Verbindung der Baugruppen der Servicezentrale SZ kann alternativ über einen gemeinsamen Systembus erfolgen. Als Servicezentrale SZ ist z.B. ein Personal Computer mit nicht dargestelltem Kommunikationsnetzanschluß, z.B. Modem, einsetzbar. Im Speicher SP sind neben Programmen zur Steuerung der Servicezentrale SZ auch eine Referenztabelle RT und Programme APSE gespeichert, wobei die Programme APSE zum Einsatz in den Kommunikationsanlagen KA vorgesehen sind, um dort im Sinne des Verfahrens zur Fehlerbehebung fehlerbehaftete Programme APS zu ersetzen. Die Programme APS, APSE sind beispielsweise Teile eines Anlagen- Programmsystems und beinhalten Funktionen wie z.B. die Steuerung der Eingabe/Ausgabeprozessoren, einen sogenannten "Device Handler", verschiedene Applikationsprogramme und die Betriebsprogramme. Die Verbindungen zwischen den Kommunikationsanlagen KA und der Servicezentrale SZ ermöglichen sowohl die Übermittlung von Fehlermeldungen M von einer Kommunikationsanlage KA zur Servicezentrale SZ als auch die Übermittlung von zur Fehlerbehebung vorgesehenen Programmen APSE von der Servicezentrale SZ zu der fehlerbehafteten Kommunikationsanlage KA.

In FIG 2 ist eine fehlerbehaftete Kommunikationsanlage KA mit zumindest einem fehlerbehafteten Programm APS dargestellt. In der Kommunikationsanlage KA werden Fehlermeldungen M generiert und an die Servicezentrale SZ übermittelt, worauf die Kommunikationsanlage KA von der Servicezentrale SZ zur Behebung des Fehlers vorgesehene Programme APSE übermittelt bekommt. Die erste Fehlermeldung M beinhaltet eine Fehlerinformation fi, die der Servicezentrale SZ die Fehlernummer fn (121) und die Fehlerklasse fk (05) indiziert. Dabei bezeichnen die Fehlernummer fn die Fehlerursache bzw. die Fehlersymptome und die Fehlerklasse fk zumindest ein in der Kommunikationsanlage KA eingesetztes Programm APS.

Die Servicezentrale SZ enthält die Referenztabelle RT. In dieser Referenztabelle RT sind die in der Fehlerinformation fi enthaltenen Fehlernummern fn und Fehlerklassen fk Programmen APSE zugeordnet, die zur Behebung von Fehlern in den Kommunikationsanlagen KA durch Ersatz dort eingesetzter Programme APS vorgesehen sind. Diese Referenztabelle RT kann mit den in FIG 1 dargestellten Eingabemitteln TER geändert und aktualisiert werden und durch die Anzeigemittel ANZ visualisiert werden. Die Referenztabelle RT enthält nur eindeutige Zuordnungen von Fehlerinformationen fi zu zur Fehlerbehebung vorgesehenen Programmen APSE.

Nach Eintreffen der ersten Fehlermeldung M wird in der Servicezentrale SZ ein Vergleich der übermittelten Fehlerinformation fi (121 05) mit den der Referenztabelle RT enthaltenen Fehlerinformationen fi (040 01, 121 05, 018 04) durchgeführt. Bei Übereinstimmung der übermittelten Fehlerinformation fi (121 05) mit einer gespeicherten Fehlerinformation fi (121 05) wird das zur Fehlerbehebung vorgesehene Programm oder die vorgesehenen Programme APSE (212.01) identifiziert.

In der Kommunikationsanlage KA wird ergänzend zur ersten Fehlermeldung M eine zweite Fehlermeldung M mit einer zusätzlichen Identifikationsinformation ii (210.01) generiert und an die Servicezentrale SZ übermittelt. Die Informationen der ersten und zweiten Fehlermeldung M können auch in einer einzigen Fehlermeldung, d.h. in der ersten Fehlermeldung M zusammengefaßt sein. Die Identifikationsinformation ii umfaßt die nicht dargestellte Kennzeichnung der fehlerbehafteten Kommunikationsanlage KA und zusätzliche Angaben zur in der Kommunikationsanlage KA eingesetzten Programmen APS. Diese Angaben können auch um Angaben zur Schaltungstechnik ergänzt werden - nicht dargestellt.

In der Servicezentrale SZ wird im folgenden ein Test ausgeführt, ob die in der Kommunikationsanlage KA bisher eingesetzte Version des zumindest einen Programms APS (210.01) eine ältere Programmversion als die in der Servicezentrale SZ zur Verfügung stehende Version des zumindest einen Programms APSE (212.01) ist und damit eine Fehlerbehebung durch Ersatz des zumindest einen in der Kommunikationsanlage KA bisher eingesetzten Programmes APS durch das zur Fehlerbehebung vorgesehene zumindest eine Programm APSE möglich ist. Ergibt dieser Test die Behebbarkeit des Fehlers, wird das zur Behebung des Fehlers vorgesehene zumindest eine Programm APSE an die Kommunikationsanlage übermittelt.

Ist eine Fehlerbehebung auf diese Weise nicht möglich, wird eine Fehlerprotokollierung veranlaßt. Das Fehlerprotokoll FPumfaßt sowohl Fehlerinformationen fi als auch die fehlerbehaftete Kommunikationsanlage KA identifizierende Angaben ii. In der Servicezentrale SZ besteht über die Eingabemittel TER und Anzeigemittel ANZ die Möglichkeit, auf dieses Fehlerprotokoll FP zurückzugreifen und anderweitige Fehlerbehebungsmaßnahmen einzuleiten. Die Übermittlung des zumindest einen zur Fehlerbehebung vorgesehenen Programms APSE erfolgt, sofern nicht unmittelbar erforderlich, zu verkehrsarmen bzw. gebührengünstigen Zeiten zwischen Servicezentrale SZ und Kommunikationsanlage KA; die Übermittlung kann durch die Servicezentrale SZ für die Nachtstunden voreingestellt werden.

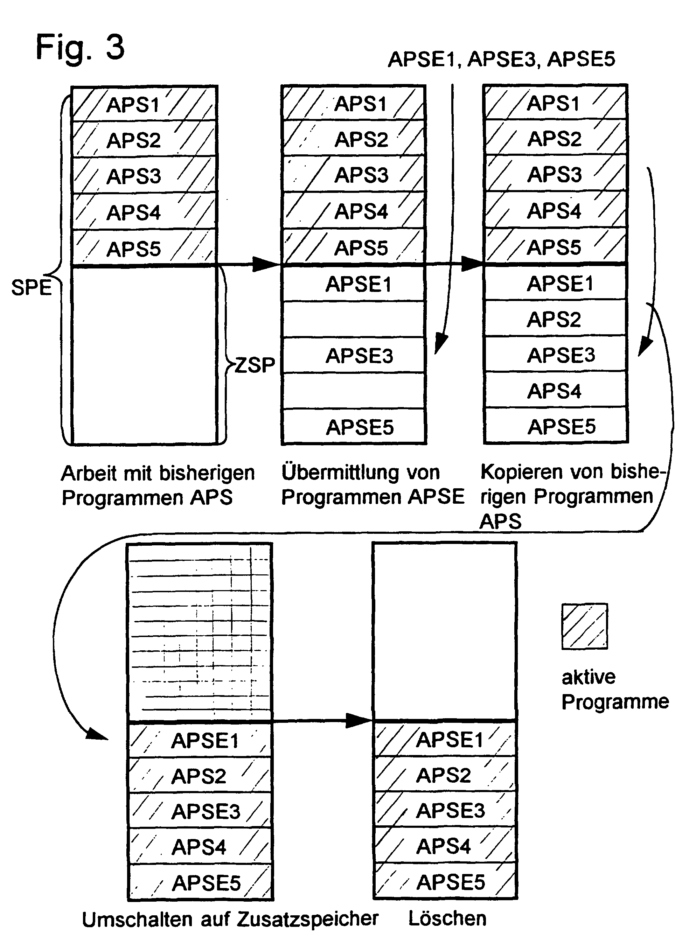

Der Ersatz der bisher eingesetzten Programme APS in der Kommunikationsanlage KA bei laufenden Betrieb durch die übermittelten, zur Fehlerbehebung vorgesehenen Programme APSE wird anhand der FIG 3 erläutert. Eine Kommunikationsanlage KA verfügt über zumindest einen Speicher SPE mit einem Speicherbereich, der zumindest die zweifache Abspeicherung der im Sinne des erfindungsgemäßen Verfahrens austauschbaren Programme APS, APSE erlaubt. Die fehlerbehaftete Kommunikationsanlage KA arbeitet auch nach Eintreten des Fehlers zumindest teilweise mit den bisher verwendeten Programmen APS, beispielhaft werden fünf Programme APS1..5 angenommen.

Vor einer Übermittlung der zur Fehlerbehebung vorgesehenen Programme APSE finden Tests statt, ob in der Kommunikationsanlage KA ein zur Übermittlung ausreichender Zusatzspeicher ZSP vorhanden ist und ob dessen Speicherbereich nicht schreibgeschützt ist. Sind diese Tests erfolgreich, wird nachgefragt, welche Bereiche im Zusatzspeicher ZSP verfügbar sind. Es besteht zusätzlich die Möglichkeit, die Teilnehmerdaten, d.h. die Daten über die mit der Kommunikationsanlage KA aktuell verbundenen oder verbindbaren Kommunikationsendgeräte KE, als zusätzliche Sicherheitsmaßnahme zu kopieren.

Sind diese Vorbereitungsmaßnahmen zur Programmübermittlung getroffen, werden die beispielhaften drei zur Fehlerbehebung vorgesehenen Programme APSE1, APSE3, APSE5 von der Servicezentrale SZ an die Kommunikationsanlage KA übermittelt und dort in den Zusatzspeicher ZSP geladen. Die übermittelten Programme APSE1, APSE3, APSE5 werden mit bereits bisher verwendeten Programmen APS2, APS4 im Zusatzspeicher ZSP durch Kopieren ergänzt, um ein vollständig funktionsfähiges Programmsystem in der Kommunikationsanlage KA zu erzeugen. Übermittelte zur Fehlerbehebung vorgesehene Programme APSE können u.U. jeweils mehrere bisher eingesetzte Programme APS ersetzten oder zum Ersatz eines bisher eingesetzten Programms APS können mehrere zu übermittelnde Programme APSE nötig sein. Die Gestaltung neuer Programmversionen APSE ist nicht durch eine vorherige Einteilung der Funktionen der Kommunikationsanlage KA auf die einzelnen bisher eingesetzten Programme APS eingeengt. Die Spezialisierung bzw. Generalisierung der zur Fehlerbehebung vorgesehenen Programme APSE ist für verschiedene schaltungstechnische Ausgestaltungen von Kommunikationsanlagen KA jeweils möglich. Für jedes übermittelte Programm APSE1, APSE3, APSE5 oder einen Teil davon wird nach der Übermittlung ein Bittest zum Test auf Übertragungsfehler vorgenommen. Wird ein Fehler festgestellt, wird das fehlerhafte Programmsegment gelöscht, die Übermittlungsverbindung abgebrochen und eventuell eine neue Übertragung eingeleitet.

Für das vollständig im Zusatzspeicher ZSP geladene, zur Fehlerbehebung vorgesehene Programmsystem wird anschließend nochmals ein Bittest durchgeführt. Ist dieser erfolgreich, werden die Maßnahmen zum Umschalten auf das zur Fehlerbehebung vorgesehene Programmsystem eingeleitet. Das Umschalten kann sowohl sofort als auch verzögert geschehen. Die Verzögerungszeit kann voreingestellt werden. Vor dem Umschalten auf das zur Fehlerbehebung vorgesehene Programmsystem wird dieses initialisiert.

Die Übermittlung der zur Fehlerbehebung vorgesehenen Programme APSE und das Umschalten auf das zur Fehlerbehebung vorgesehene Programmsystem kann jederzeit von der Servicezentrale SZ abgebrochen werden. In diesem Fall wird die Kommunikationsanlage KA in den vorhergehenden Zustand zurückgesteuert. Nach dem Umschalten können die bisher genutzten Programme APS1, APS3, APS5 zumindest teilweise gelöscht werden, damit bei Auftreten weiterer Fehler wieder ausreichend Speicherplatz verfügbar ist. Während der Übermittlung der zur Fehlerbehebung vorgesehenen Programme APSE1, APSE3, APSE5 und während des Umschaltens werden fehler- und verfahrensspezifische Protokollmeldungen FP erzeugt und in einen Protokollspeicher abgelegt, dessen Inhalt zur Servicezentrale SZ übertragen oder von dieser abgefragt werden kann.

## Patentansprüche

1. Verfahren zur Fehlerbehebung in mit einer Servicezentrale (SZ) verbindbaren durch Programme (APS) gesteuerten Kommunikationsanlagen (KA), bei dem
- in der Servicezentrale (SZ) kommunikationsanlagenprogrammspezifische Fehlerinformationen (fi) gespeichert sind, denen jeweils zumindest ein zur Fehlerbehebung vorgesehenes Programm (APSE) zugeordnet ist,
- zumindest eine in einer der Kommunikationsanlagen (KA) gebildete Fehlermeldung (M) zur Fehlerindikation von dieser an die Servicezentrale (SZ) übermittelt wird,
- in der Servicezentrale (SZ) die in der Fehlermeldung (M) enthaltende Fehlerinformation (fi) mit den gespeicherten Fehlerinformationen (fi) verglichen wird,
- bei Übereinstimmung durch die Servicezentrale (SZ) das zugeordnete zumindest eine zur Behebung des Fehlers vorgesehene Programm (APSE) an die Kommunikationsanlage (KA) übermittelt wird und
- das zumindest eine übermittelte, zur Fehlerbehebung vorgesehene Programm (APSE) in der Kommunikationsanlage (KA) gespeichert und in den aktuellen Funktionsablauf der Kommunikationsanlage (KA) einbezogen wird,
**dadurch gekennzeichnet, dass**
- die Einbeziehung des zumindest einen übermittelten, zur Fehlerbeseitigung vorgesehenen Programms (APSE) während des Betriebes der Kommunikationsanlage (KA) erfolgt, indem das zumindest eine von der Servicezentrale (SZ) übermittelte, zur Fehlerbehebung vorgesehene Programm (APSE) in einen der jeweiligen Kommunikationsanlage (KA) zugeordneten Zusatzspeicher geladen wird und daß zum Ersatz des zumindest einen bisher in den Funktionsablauf einbezogenen Programms (APS) zumindest teilweise auf das zumindest eine in den Zusatzspeicher geladene, zur Fehlerbehebung vorgesehene Programm (APSE) umgeschaltet wird.

2. Verfahren nach Anspruch 1,
**dadurch gekennzeichnet**
**daß** die Einbeziehung des zumindest einen übermittelten, zur Fehlerbehebung vorgesehenen Programms (APSE) in den aktuellen Funktionsablauf der Kommunikationsanlage (KA) durch Ersatz des zumindest einen bisher in den Funktionsablauf einbezogenen Programmes (APS) bewirkt wird.

3. Verfahren nach Anspruch 1 oder 2,
**dadurch gekennzeichnet**
**daß** die Fehlerinformation (fi) durch eine Fehlerklasse (fk), die zumindest ein Programm (APS) bezeichnet, und durch eine die Fehlerursache beschreibende Fehlernummer (fn) gebildet wird.

4. Verfahren nach einem der Ansprüche 1, 2 oder 3,
**dadurch gekennzeichnet**
**daß** in der Servicezentrale (SZ) zusätzlich Identifikationsinformationen (ii) für die Kommunikationsanlagen (KA) gespeichert sind und
**daß** sofern eine Identifikationsinformation (ii) in einer Fehlermeldung (M) enthalten ist, diese Identifikationsinformation (ii) in den Vergleich der übermittelten und gespeicherten Fehlerinformationen (fi) einbezogen wird.

5. Verfahren nach Anspruch 4,
**dadurch gekennzeichnet,**
**daß** die Identifikationsinformationen (ii) zusätzliche Konfigurationsangaben zur schaltungstechnischen Konfiguration der die Fehlermeldung (M) übermittelnden Kommunikationsanlage (KA) enthalten und daß die Konfigurationsangaben ebenfalls in der Servicezentrale (SZ) gespeichert sind und in den Vergleich der übermittelten und gespeicherten Fehlerinformationen (fi) einbezogen werden.

6. Verfahren nach einem der vorangehenden Ansprüche,
**dadurch gekennzeichnet,**
**daß** in der Servicezentrale (SZ) eine Referenztabelle (RT) zur Zuordnung von durch die Fehlerinformation (fi) beschriebenen Fehlerarten zu den zur Fehlerbehebung vorgesehenen Programmen (APSE) unter Berücksichtigung verschiedener schaltungstechnisch und programmtechnischer Konfigurationen der Kommunikationsanlagen (KA) vorgesehen ist.

7. Verfahren nach einem der vorangehenden Ansprüche,
**dadurch gekennzeichnet,**
**daß** in der Servicezentrale (SZ) die durch eine Einbeziehung des zumindest einen übermittelten, zur Fehlerbehebung vorgesehenen Programms (APSE) nicht behebbaren Fehler unter Angabe der Identifikationsinformation (ii) und der Fehlerinformation (fi) protokolliert werden.

8. Verfahren nach einem der vorangehenden Ansprüche,
**dadurch gekennzeichnet,**
**daß** die zur Fehlerbehebung vorgesehenen Programme (APSE) zumindest teilweise in der Servicezentrale (SZ) intern und/oder extern gespeichert sind.

9. Verfahren nach einem der vorangehenden Ansprüche,
**dadurch gekennzeichnet,**
**daß** die zumindest eine Fehlermeldung (M) in der Servicezentrale (SZ) angezeigt wird.

10. Anordnung zur Fehlerbehebung in mit einer Servicezentrale (SZ) verbindbaren durch Programme (APS) gesteuerten Kommunikationsanlagen (KA), wobei
- in einem der Servicezentrale (SZ) zugeordneten Speicher (SP), in dem zumindest eine über Eingabemittel (TER) beeinflußbare Referenztabelle (RT) mit kommunikationsanlagenprogrammspezifischen Fehlerinformationen (fi), denen jeweils zumindest ein zur Fehlerbehebung vorgesehenes Programm (APSE) zugeordnet ist, gespeichert ist und
- in der Servicezentrale (SZ) und in den Kommunikationsanlagen (KA) zusätzliche Mittel vorgesehen und derart ausgestaltet sind, daß
- zumindest eine in einer der Kommunikationsanlagen (KA) gebildete Fehlermeldung (M) zur Fehlerindikation von dieser an die Servicezentrale (SZ) übermittelt wird,
- in der Servicezentrale (SZ) die in der Fehlermeldung (M) enthaltende Fehlerinformation (fi) mit den gespeicherten Fehlerinformationen (fi) verglichen wird,
- bei Übereinstimmung durch die Servicezentrale (SZ) das zugeordnete zumindest eine zur Behebung des Fehlers vorgesehene Programm (APSE) an die Kommunikationsanlage (KA) übermittelt wird und
- das zumindest eine übermittelte, zur Fehlerbehebung vorgesehene Programm (APSE) in der Kommunikationsanlage (KA) gespeichert und in den aktuellen Funktionsablauf der Kommunikationsanlage (KA) einbezogen wird,
**dadurch gekennzeichnet, dass**
die Kommunikationsanlage zur Einbeziehung des zumindest einen übermittelten, zur Fehlerbeseitigung vorgesehenen Programms (APSE) während des Betriebes der Kommunikationsanlage (KA) eingerichtet ist, indem das zumindest eine von der Servicezentrale (SZ) übermittelte, zur Fehlerbehebung vorgesehene Programm (APSE) in einen der jeweiligen Kommunikationsanlage (KA) zugeordneten Zusatzspeicher geladen wird, und dass die Kommunikationsanlage zum Ersatz des zumindest einen bisher in den Funktionsablauf einbezogenen Programms (APS) zur zumindest teilweisen Umschaltung auf das zumindest eine in den Zusatzspeicher geladene, zur Fehlerbehebung vorgesehene Programm (APSE) eingerichtet ist.

## Claims

1. Method for eliminating faults in communication installations (KA) that are controlled by programs (APS) and can be connected to a service control centre (SZ), in which
- communication-installation-program-specific fault information items (fi) which are assigned in each case at least one program (APSE) provided for eliminating faults are stored in the service control centre (SZ)
- at least one fault message (M) formed in one of the communication installations (KA) and serving for fault indication is communicated from the latter to the service control centre (SZ),
- the fault information (fi) contained in the fault message (M) is compared with the stored fault information items (fi) in the service control centre (SZ),
- in the event of matching, the assigned at least one program (APSE) provided for eliminating the fault is communicated to the communication installation (KA) by the service control centre (SZ), and
- the at least one communicated program (APSE) provided for eliminating faults is stored in the communication installation (KA) and incorporated into the current functional sequence of the communication installation (KA),
**characterized in that**
- the incorporation of the at least one communicated program (APSE) provided for debugging is effected during the operation of the communication installation (KA) by virtue of the fact that the at least one program (APSE) provided for eliminating faults that is communicated by the service control centre (SZ) is loaded into an additional memory assigned to the respective communication installation (KA), and that for the purpose of replacing the at least one program (APS) previously incorporated into the functional sequence, a changeover is made at least in part to the at least one program (APSE) provided for eliminating faults that is loaded into the additional memory.

2. Method according to Claim 1,
**characterized**
**in that** the incorporation of the at least one communicated program (APSE) provided for eliminating faults into the current functional sequence of the communication installation (KA) is effected by replacing the at least one program (APS) previously incorporated into the functional sequence.

3. Method according to Claim 1 or 2,
**characterized**
**in that** the fault information (fi) is formed by a fault class (fk), which designates at least one program (APS), and by a fault number (fn) describing the fault cause.

4. Method according to one of Claims 1, 2 or 3,
**characterized**
**in that** identification information items (ii) for the communication installations (KA) are additionally stored in the service control centre (SZ), and
**in that**, if an identification information item (ii) is contained in a fault message (M), this identification information item (ii) is incorporated into the comparison of the communicated and stored fault information items (fi).

5. Method according to Claim 4,
**characterized**
**in that** the identification information items (ii) contain additional configuration specifications for the circuitry configuration of the communication installation (KA) that communicates the fault message (M), and in that the configuration specifications are likewise stored in the service control centre (SZ) and are incorporated into the comparison of the communicated and stored fault information items (fi).

6. Method according to one of the preceding claims,
**characterized**
**in that** a reference table (RT) for assigning fault types described by the fault information (fi) to the programs (APSE) provided for eliminating faults, taking account of different circuitry and program-technological configurations of the communication installations (KA) is provided in the service control centre (SZ).

7. Method according to one of the preceding claims,
**characterized**
**in that** the faults that cannot be eliminated by incorporation of the at least one communicated program (APSE) provided for eliminating faults are logged, with special indication of the identification information (ii) and the fault information (fi), in the service control centre (SZ).

8. Method according to one of the preceding claims,
**characterized**
**in that** the programs (APSE) provided for eliminating faults are stored internally and/or externally at least in part in the service control centre (SZ).

9. Method according to one of the preceding claims,
**characterized**
**in that** the at least one fault message (M) is indicated in the service control centre (SZ).

10. Arrangement for eliminating faults in communication installations (KA) that are controlled by programs (APS) and can be connected to a service control centre (SZ),
- in a memory (SP) assigned to the service control centre (SZ), in which memory is stored at least one reference table (RT) that can be influenced via input means (TER) with communication-installation-program-specific fault information items (fi) which are in each case assigned at least one program (APSE) provided for eliminating faults, and
- additional means being provided in the service control centre (SZ) and in the communication installations (KA) and being configured in such a way that
- at least one fault message (M) formed in one of the communication installations (KA) and serving for fault indication is communicated from the latter to the service control centre (SZ),
- the fault information (fi) contained in the fault message (M) being compared with the stored fault information items (fi) in the service control centre (SZ),
- in the event of matching, the assigned at least one program (APSE) provided for eliminating the fault being communicated to the communication installation (KA) by the service control centre (SZ), and
- the at least one communicated program (APSE) provided for eliminating faults being stored in the communication installation (KA) and incorporated into the current functional sequence of the communication installation (KA),
**characterized in that**
the communication installation is set up for incorporating the at least one communicated program (APSE) provided for debugging during the operation of the communication installation (KA) by virtue of the fact that the at least one program (APSE) provided for eliminating faults that is communicated by the service control centre (SZ) is loaded into an additional memory assigned to the respective communication installation (KA), and that the communication installation is set up, for replacing the at least one program (APS) previously incorporated into the functional sequence, for the at least partial changeover to the at least one program (APSE) provided for eliminating faults that is loaded into the additional memory.

## Revendications

1. Procédé pour l'élimination d'erreurs dans des installations de communication (KA) pouvant être reliées à un central de maintenance (SZ) et commandées par des programmes (APS), dans lequel
- des informations d'erreurs (fi) qui sont spécifiques aux programmes d'installations de communication et auxquelles au moins un programme (APSE) prévu pour l'élimination d'erreurs est associé respectivement sont mémorisées dans le central de maintenance (SZ),
- on transmet au moins un message d'erreur (M), formé dans l'une des installations de communication (KA) et destiné à indiquer une erreur, de cette installation de communication au central de maintenance (SZ),
- dans le central de maintenance (SZ), on compare l'information d'erreur (fi) contenue dans le message d'erreur (M) aux informations d'erreurs (fi) mémorisées,
- en cas d'égalité, le central de maintenance (SZ) transmet à l'installation de communication (KA) le ou les programmes (APSE) associés prévus pour l'élimination de l'erreur, et
- on mémorise dans l'installation de communication (KA) le ou les programmes (APSE) prévus pour l'élimination d'erreurs et transmis et on les inclut dans l'exécution de la séquence fonctionnelle actuelle de l'installation de communication (KA),
**caractérisé par le fait que**
- l'intégration du ou des programmes (APSE), prévus pour l'élimination d'erreurs et transmis, s'effectue pendant le fonctionnement de l'installation de communication (KA) en chargeant le ou les programmes (APSE), prévus pour l'élimination d'erreurs et transmis par le central de maintenance (SZ), dans une mémoire supplémentaire associée à l'installation de communication (KA) respective et, pour le remplacement du ou des programmes (APS) inclus jusqu'alors dans l'exécution de la séquence fonctionnelle, on commute au moins partiellement sur le ou les programmes (APSE) prévus pour l'élimination d'erreurs et chargés dans la mémoire supplémentaire.

2. Procédé selon la revendication 1,
**caractérisé par le fait que** l'on provoque l'intégration du ou des programmes (APSE), prévus pour l'élimination d'erreurs et transmis, dans l'exécution de la séquence fonctionnelle actuelle de l'installation de communication (KA) en remplaçant le ou les programmes (APS) inclus jusqu'alors dans l'exécution de la séquence fonctionnelle.

3. Procédé selon la revendication 1 ou 2,
**caractérisé par le fait que** l'on forme l'information d'erreur (fi) avec une classe d'erreur (fk), qui désigne au moins un programme (APS), et avec un numéro d'erreur (fn), qui décrit la cause de l'erreur.

4. Procédé selon l'une des revendications 1, 2 ou 3,
**caractérisé par le fait que**
des informations d'identification (ii) pour les installations de communication (KA) sont mémorisées en plus dans le central de maintenance (SZ), et
dans la mesure où une information d'identification (ii) est contenue dans un message d'erreur (M), on inclut cette information d'identification (ii) dans la comparaison des informations d'erreurs (fi) transmises et des informations d'erreurs (fi) mémorisées.

5. Procédé selon la revendication 4,
**caractérisé par le fait que**
les informations d'identification (ii) contiennent des données de configuration supplémentaires concernant la configuration de la technique des circuits de l'installation de communication (KA) transmettant le message d'erreur (M) et les données de configuration sont également mémorisées dans le central de maintenance (SZ) et sont incluses dans la comparaison des informations d'erreurs (fi) transmises et des informations d'erreurs (fi) mémorisées.

6. Procédé selon l'une des revendications précédentes,
**caractérisé par le fait que**
il est prévu dans le central de maintenance (SZ) un tableau de références (RT) pour l'association de types d'erreurs, décrits par l'information d'erreur (fi), aux programmes (APSE), prévus pour l'élimination d'erreurs, en tenant compte de différentes configurations de la technique des circuits et de la technique des programmes des installations de communication (KA).

7. Procédé selon l'une des sous-revendications,
**caractérisé par le fait que**,
dans le central de maintenance (SZ), on enregistre dans un rapport les erreurs ne pouvant pas être éliminées par l'intégration du ou des programmes (APSE), prévus pour l'élimination d'erreurs et transmis, en indiquant l'information d'identification (ii) et l'information d'erreur (fi).

8. Procédé selon l'une des revendications précédentes,
**caractérisé par le fait que**
les programmes (APSE) prévus pour l'élimination d'erreurs sont mémorisés au moins en partie dans le central de maintenance (SZ) de manière interne et/ou externe.

9. Procédé selon l'une des revendications précédentes,
**caractérisé par le fait que**
l'on affiche le ou les messages d'erreurs (M) dans le central de maintenance (SZ).

10. Dispositif pour l'élimination d'erreurs dans des installations de communication (KA) pouvant être reliées à un central de maintenance (SZ) et commandées par des programmes (APS), dans lequel
- au moins un tableau de références (RT) pouvant être influencé par des moyens d'entrée (TER) et comportant des informations d'erreurs (fi) qui sont spécifiques aux programmes d'installations de communication et auxquelles au moins un programme (APSE) prévu pour l'élimination d'erreurs est associé respectivement est mémorisé dans une mémoire (SP) associée au central de maintenance (SZ), et
- des moyens supplémentaires sont prévus dans le central de maintenance (SZ) et dans les installations de communication (KA) et ils sont conçus de telle sorte que
-- au moins un message d'erreur (M), formé dans l'une des installations de communication (KA) et destiné à indiquer une erreur, est transmis de cette installation de communication au central de maintenance (SZ),
-- dans le central de maintenance (SZ), l'information d'erreur (fi) contenue dans le message d'erreur (M) est comparée aux informations d'erreurs (fi) mémorisées,
-- en cas d'égalité, le central de maintenance (SZ) transmet à l'installation de communication (KA) le ou les programmes (APSE) associés prévus pour l'élimination de l'erreur, et
-- le ou les programmes (APSE) prévus pour l'élimination d'erreurs et transmis sont mémorisés dans l'installation de communication (KA) et sont inclus dans l'exécution de la séquence fonctionnelle actuelle de l'installation de communication (KA),
**caractérisé par le fait que**
l'installation de communication est conçue pour l'intégration du ou des programmes (APSE), prévus pour l'élimination d'erreurs et transmis, pendant le fonctionnement de l'installation de communication (KA) en chargeant le ou les programmes (APSE), prévus pour l'élimination d'erreurs et transmis par le central de maintenance (SZ), dans une mémoire supplémentaire associée à l'installation de communication (KA) respective, et, pour le remplacement du ou des programmes (APS) inclus jusqu'alors dans l'exécution de la séquence fonctionnelle, l'installation de communication est conçue pour commuter au moins partiellement sur le ou les programmes (APSE) prévus pour l'élimination d'erreurs et chargés dans la mémoire supplémentaire.
